(19) Europäisches Patentamt / European Patent Office / Office européen des brevets

(11) **EP 2 873 524 A1**

(12) **EUROPEAN PATENT APPLICATION**
published in accordance with Art. 153(4) EPC

(43) Date of publication:
**20.05.2015 Bulletin 2015/21**

(21) Application number: **13816854.7**

(22) Date of filing: **25.06.2013**

(51) Int Cl.:
**B32B 27/30** (2006.01)  **B32B 27/32** (2006.01)
**B65D 23/08** (2006.01)  **B65D 25/36** (2006.01)
**B65D 65/40** (2006.01)  **G09F 3/04** (2006.01)

(86) International application number:
**PCT/JP2013/067326**

(87) International publication number:
**WO 2014/010406 (16.01.2014 Gazette 2014/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.07.2012 JP 2012154587**

(71) Applicant: **Fuji Seal International, Inc.
Osaka-shi, Osaka 532-0003 (JP)**

(72) Inventors:
• **BANNO Shinji
  Osaka-shi
  Osaka 532-0003 (JP)**
• **UMEDA Hideaki
  Osaka-shi
  Osaka 532-0003 (JP)**
• **MIYAZAKI Akira
  Osaka-shi
  Osaka 532-0003 (JP)**

(74) Representative: **Grünecker Patent- und
Rechtsanwälte
PartG mbB
Leopoldstraße 4
80802 München (DE)**

(54) **SHRINK FILM AND SHRINK LABEL**

(57)     Provided is a shrink film including a polystyrene resin layer and a polypropylene resin layer, having a low specific gravity and high shrinkability, and having a high interlaminar strength.

The shrink film has a multilayer structure including layers A, B, C, B, and A disposed in this sequence without the mediation of another layer. The layers A include 50 percent by weight or more of a polystyrene resin. The layers B include 20 to 80 percent by weight of a polystyrene resin and 20 to 80 percent by weight of a polypropylene resin. The layer C includes 50 percent by weight or more of a polypropylene resin. The polystyrene resin in the layer A includes a styrenic-monomer-derived constitutional unit in a content of 85 to 95 percent by weight and a diene-derived constitutional unit in a content of 5 to 15 percent by weight. The polystyrene resin in the layer B includes a styrenic-monomer-derived constitutional unit in a content of 50 to 80 percent by weight and a diene-derived constitutional unit in a content of 20 percent by weight to less than 50 percent by weight.

[Fig. 1]

EP 2 873 524 A1

## Description

Technical Field

The present invention relates to shrink films. More specifically, the present invention relates to a hybrid multilayer shrink film including layers of different kinds, where the shrink film contains a resin layer including a polypropylene resin and a resin layer including a polystyrene resin, has a low specific gravity and high shrinkability, and still exhibits excellent interlaminar strengths.

Background Art

Plastic bottles such as PET (poly(ethylene terephthalate)) bottles, and metal bottles such as bottle-shaped cans are now widely used as beverage containers typically for tea and soft drinks. These containers are often equipped with a plastic label for labeling (indication), decoration, and/or functionalization. Typically, there are widely used shrink labels each including a shrink film (heat-shrinkable film) and a print layer disposed on the film. Advantageously, the shrink labels offer decorativeness and processability (conformability to the container) and have wide display areas.
Of the shrink films, there are known hybrid multilayer films including two or more layers of different resin materials so as to impart various functions to the films. Typically, a film for heat-shrinkable label is known as a shrink film having both a low specific gravity and seaming (center-seal) ability by a solvent. The shrink film includes a polyolefin resin layer as a core and resin layers disposed over both sides of the core through the mediation of an acid-modified polyethylene resin and include a polystyrene resin as a principal component (see, for example, Patent Literature (PTL) 1). Independently, a heat-shrinkable multilayer film is known as a shrink film having not only a low specific gravity, but also good printability, solvent sealability, and dimensional stability. The heat-shrinkable multilayer film includes an olefinic resin layer, over both sides of the layer through the mediation of an adhesive resin layer, two outer layers including a styrenic resin, where the adhesive resin layer includes a hydrogenated styrenic resin (see, for example, PTL 2).
However, both the film for heat-shrinkable label described in PTL 1 and the heat-shrinkable multilayer film described in PTL 2 fail to have sufficiently good shrinkability, and this demands a shrink film having better shrinkability. In particular, hybrid multilayer films demand shrink films that do not encounter trouble caused by delamination and have high interlaminar strengths.

Citation List

Patent Literature

PTL 1: Japanese Patent No. 3286594
PTL 2: Japanese Unexamined Patent Application Publication (JP-A) No. 2002-86637

Summary of Invention

Technical Problem

Specifically, the present invention has an object to provide a shrink film as follows. The shrink film is a hybrid multilayer film containing a resin layer including a polystyrene resin as a principal component, and a resin layer including a polypropylene resin as a principal component. The shrink film as the hybrid multilayer film has a low specific gravity and high shrinkability. The shrink film also has high interlaminar strengths. Solution to Problem
After intensive investigations to achieve the object, the present inventors have designed a shrink film to have a multilayer structure including layers A, B, C, B, and A disposed or laminated in the specified sequence without the mediation of another layer. The layers A are each a resin layer including a polystyrene resin in a specific amount. The layers B are each a resin layer including a polystyrene resin and a polypropylene resin in specific amounts. The layer C is a resin layer including a polypropylene resin in a specific amount. The present inventors have controlled the polystyrene resins contained in the layers A and the layers B to have a content of a styrenic-monomer-derived constitutional unit and a content of a diene-derived constitutional unit within specific ranges. The present inventors have found that the resulting shrink film has a low specific gravity and high shrinkability, still offers high interlaminar strengths, and is excellent. The present invention has been made based on these findings.
Specifically, the present invention provides, in one aspect, a shrink film that includes a multilayer structure including layers A, B, C, B, and A disposed in the specified sequence without the mediation of another layer. The layers A are each independently a resin layer containing 50 percent by weight or more of a polystyrene resin. The layers B are each independently a resin layer containing 20 to 80 percent by weight of a polystyrene resin and 20 to 80 percent by weight of a polypropylene resin. The layer C is a resin layer containing 50 percent by weight or more of a polypropylene resin. The polystyrene resins in the layers A each independently include a styrenic-monomer-derived constitutional unit in a content of from 85 to 95 percent by weight, and a diene-derived (in particular, a conjugated-diene-derived) constitutional unit in a content of from 5 to 15 percent by weight. The polystyrene resins in the layers B each independently include a styrenic-monomer-derived constitutional unit in a content of from 50 to 80 percent by weight, and a diene-derived (in particular, a conjugated-diene-derived) constitutional unit in a content of from 20 percent by weight to less than 50 percent by weight.

In addition and advantageously, the present invention provides a shrink label including the shrink film. Advantageous Effects of Invention

The shrink film according to the present invention has the specific configuration, thereby has a low specific gravity, and still exhibits high shrinkability. In addition, the shrink film has high interlaminar strengths between adjacent layers and does not encounter trouble caused by delamination in production and distribution processes. For these reasons, the shrink film is particularly useful as a base film for a shrink label to be fit or attached to a container such as a PET bottle.

Brief Description of Drawings

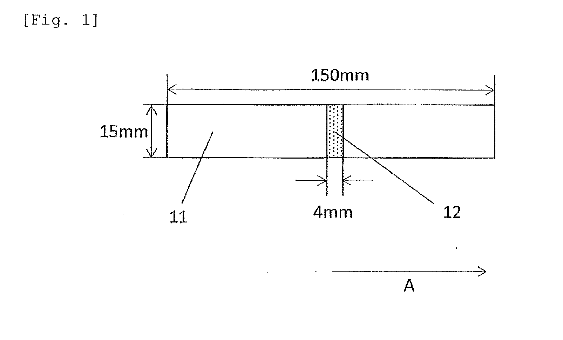

[Fig. 1] Fig. 1 is a schematic view of a sample used in a high-temperature delamination test.

Description of Embodiments

The shrink film according to the present invention includes at least layers A, B, and C. The term "layer A" refers to a resin layer containing 50 percent by weight or more of a polystyrene resin. The term "layer B" refers to a resin layer containing 20 to 80 percent by weight of a polystyrene resin and 20 to 80 percent by weight of a polypropylene resin. The term "layer C" refers to a resin layer containing 50 percent by weight or more of a polypropylene resin.

The polystyrene resin in the layer A includes a styrenic-monomer-derived constitutional unit (constitutional unit derived from a styrenic monomer) in a content of from 85 to 95 percent by weight, and a diene-derived constitutional unit (constitutional unit derived from a diene) in a content of from 5 to 15 percent by weight. The polystyrene resin in the layer B includes a styrenic-monomer-derived constitutional unit in a content of from 50 to 80 percent by weight and a diene-derived constitutional unit in a content of from 20 percent by weight to less than 50 percent by weight.

In other words, monomer components constituting the polystyrene resin in the layer A preferably includes one or more styrenic monomers in a content of from 85 to 95 percent by weight and one or more dienes in a content of from 5 to 15 percent by weight, based on the total amount (100 percent by weight) of the monomer components. Likewise, monomer components constituting the polystyrene resin in the layer B preferably includes one or more styrenic monomers in a content of from 50 to 80 percent by weight, and one or more dienes in a content of from 20 percent by weight to less than 50 percent by weight, based on the total amount (100 percent by weight) of the monomer components.

The shrink film according to the present invention includes a multilayer structure including the layer C, a pair of the layers A on both sides of the layer C each through the mediation of the layer B. Specifically, the shrink film includes, in the film, a multilayer structure including the layers A, B, C, B, and A disposed in the specified sequence without the mediation of another layer. This multilayer structure includes five layers of three kinds. In the multilayer structure including the layers A, B, C, B, and A in the specified sequence, the pair of the layers A and the pair of the layers B, where each one layer is disposed on or over each side of the layer C, are each preferably a pair of layers having an identical resin composition, but may be a pair of layers having different resin compositions within a range not adversely affecting advantageous effects of the present invention. The pair of the layers A and the pair of the layers B, where each one layer is disposed on or over each side of the layer C, may each be a pair of layers having an identical thickness or a pair of layers having different thicknesses.

The shrink film according to the present invention is exemplified by, but not limited to, a multilayer film including five layers of three kinds and including the layer A (surface layer), the layer B (intermediate layer), the layer C (core layer), the layer B (intermediate layer), and the layer A (surface layer) disposed in the specified sequence. The shrink film according to the present invention may further include one or more other layers in addition to the layers A, B, and C. Such other layer than the layers A, B, and C is not limited, but is preferably a layer that can be provided in-line in a film-forming process of the multilayer film including a multilayer structure including five layers of three kinds. The layer is exemplified by coating layers such as anchor coat layer, primer layer, and antistatic-agent layer.

Layers A

Each of the layers A is independently a resin layer containing a polystyrene resin. Hereinafter "each of the layers A" is also simply referred to as "layer A". The resin layer may contain each of different polystyrene resins alone or in combination.

The polystyrene resin is a polymer including a styrenic monomer as an essential monomer component, namely, is a polymer including a styrenic-monomer-derived constitutional unit in the molecule (per molecule). The polystyrene resin may be a homopolymer or a copolymer.

The styrenic monomer is exemplified by, but not limited to, styrene, α-methylstyrene, m-methylstyrene, p-methylstyrene, p-ethylstyrene, p-isobutylstyrene, p-t-butylstyrene, and chloromethylstyrene. Among them, styrene is preferred from the viewpoints typically of availability and material price. Each of different styrenic monomers may be used alone or in combination.

The polystyrene resin is exemplified by, but not limited to, homopolymers of a styrenic monomer, such as general purpose polystyrene (GPPS) as a styrene homopolymer; and copolymers such as a copolymer including two or more styrenic monomers alone as monomer components, a styrene-diene copolymer, a hydrogenated styrene-diene copolymer, and a copolymer of styrene and a polymerizable unsaturated carboxylic acid ester. Among them, the styrene-diene copolymer is preferred.

The styrene-diene copolymer is a copolymer including a styrenic monomer and a diene (in particular, a conjugated diene) as essential monomer components. Specifically, the styrene-diene copolymer is a copolymer that includes a styrenic-monomer-derived constitutional unit and a diene-derived (in particular, a conjugated-diene-derived) constitutional unit in the molecule (per molecule).

The diene is not limited, but preferably a conjugated diene such as 1,3-butadiene, isoprene (2-methyl-1,3-butadiene), 2,3-dimethyl-1,3-butadiene, 1,3-pentadiene, 1,3-hexadiene, and chloroprene. Among them, 1,3-butadiene is particularly preferred from the viewpoint of interlaminar strengths. Each of different dienes as described above may be used alone or in combination.

The monomer components constituting the styrene-diene copolymer may further include one or more monomer components other than the styrenic monomers and the dienes. Such other monomer components than the styrenic monomers and the dienes are exemplified by vinyl monomers, polymerizable unsaturated carboxylic acid esters, and polymerizable unsaturated carboxylic acid anhydrides.

The styrene-diene copolymer may be a copolymer of any form not limited, but may be a copolymer selected from a random copolymer, a block copolymer, and an alternating copolymer. In particular, the styrene-diene copolymer is preferably a block copolymer, such as S-D, S-D-S, D-S-D, and S-D-S-D copolymers, where S represents a styrene block, and D represents a diene block.

Specifically, the styrene-diene copolymer is exemplified by a styrene-butadiene-styrene block copolymer (SBS), a styrene-isoprene-styrene block copolymer (SIS), and a styrene-(butadiene/isoprene)-styrene block copolymer (SBIS). Among them, SBS is preferred. Each of different copolymers may be used alone or in combination.

The polystyrene resin in the layer A (all polystyrene resin(s) in the layer A) includes a styrenic-monomer-derived constitutional unit in a content of from 85 to 95 percent by weight and preferably from 85 to 90 percent by weight, based on the total weight (100 percent by weight) of all polystyrene resins in the layer A. The control of the content to 85 percent by weight or more allows the layer A and the shrink film to exhibit better shrinkability. In contrast, if the content is greater than 95 percent by weight, the layer A may become excessively hard and may cause the shrink film to become susceptible to breakage during its production, resulting in lower productivity.

The polystyrene resin in the layer A (all polystyrene resin(s) in the layer A) includes a diene-derived constitutional unit in a content of from 5 to 15 percent by weight and preferably from 10 to 15 percent by weight, based on the total weight (100 percent by weight) of all polystyrene resins in the layer A. In particular, the polystyrene resin in the layer A preferably includes a constitutional unit derived from a conjugated diene in a content within the range. The control of the content to 15 percent by weight or less allows the layer A and the shrink film to have better shrinkability. In contrast, if the content is less than 5 percent by weight, the layer A may become excessively hard and may cause the shrink film to be susceptible to breakage during its production, resulting in lower productivity.

In an embodiment, the polystyrene resin in the layer A is a resin mixture including two or more different polystyrene resins. In this embodiment, the "content of a styrenic-monomer-derived constitutional unit" and the "content of a diene-derived constitutional unit" each refer to a content in the resin mixture.

The content of a styrenic-monomer-derived constitutional unit and the content of a diene-derived constitutional unit may be controlled by the composition of the polystyrene resin(s) in the layer A, where the composition includes the contents of individual constitutional units in individual polystyrene resins, and the proportions (contents) of the individual polystyrene resins in all the polystyrene resin(s) in the layer A. More specifically, assume that the polystyrene resin in the layer A is a resin mixture including a polystyrene resin (PS1) and a polystyrene resin (PS2) alone. In the resin mixture, the polystyrene resin (PS1) has a content $s_1$ (percent by weight) of a styrenic-monomer-derived constitutional unit and

a content $d_1$ (percent by weight) of a diene-derived constitutional unit. The polystyrene resin (PS2) has a content $s_2$ (percent by weight) of a styrenic-monomer-derived constitutional unit and a content $d_2$ (percent by weight) of a diene-derived constitutional unit. The resin mixture (resin mixture of PS1 and PS2) includes PS1 in a content of $W_1$ (percent by weight) and PS2 in a content of $W_2$ (percent by weight) based on the total amount (100 percent by weight) of the resin mixture. In this case, the content of a styrenic-monomer-derived constitutional unit and the content of a diene-derived constitutional unit in the resin mixture may generally be controlled as calculated according to expressions below. This is also true for the content of a styrenic-monomer-derived constitutional unit and the content of a diene-derived constitutional unit in the layer B.

$$\text{Content of a styrenic-monomer-derived constitutional unit (percent by weight)} = (s_1 \times W_1 + s_2 \times W_2)/100$$

$$\text{Content of a diene-derived constitutional unit (percent by weight)} = (d_1 \times W_1 + d_2 \times W_2)/100$$

The constitutional units (the styrenic-monomer-derived constitutional unit and the diene-derived constitutional unit) and the contents of the constitutional units may be analyzed/measured typically, but not limitatively, by nuclear magnetic resonance (NMR) analysis and/or with a gas chromatograph-mass spectrometer (GCMS). Constitutional units and their contents in other resin layers (e.g., the layers B and C) and other resins may be analyzed/measured in the same manner as above.

The polystyrene resin may also be selected from commercial products. The commercial products are exemplified by Styrolux S (an SBS) supplied by BASF SE.

The layer A (each layer A) contains the polystyrene resin in a content of 50 percent by weight or more (from 50 to 100 percent by weight), preferably from 80 to 100 percent by weight, and more preferably from 90 to 100 percent by weight, based on the total weight (100 percent by weight) of the layer A. The layer A, if containing the polystyrene resin in a content of less than 50 percent by weight, may have inferior shrinkability and may thereby cause the shrink film to have inferior shrinkability. In an embodiment, the layer A includes two or more polystyrene resins. In this embodiment, the term "content of the polystyrene resin in the layer A" refers to "the total sum of contents of all the polystyrene resin(s) in the layer A". In particular, the layer A preferably contains a styrene-diene copolymer in a content within the range.

The layer A may further include one or more components (additional components) other than the polystyrene resin according to necessity. Such additional components are exemplified by lubricants, fillers, thermal stabilizers, antioxidants, ultraviolet absorbers, antistatic agents, anti-fogging agents, flame retardants, colorants, and pinning agents (alkaline earth metals).

Layers B

Each of the layers B is independently a resin layer including a polystyrene resin and a polypropylene resin. Hereinafter "each of the layers B" is also simply referred to as "layer B". The layer B may include each of different polystyrene resins and each of different polypropylene resins independently alone or in combination.

The polystyrene resin (namely, the polystyrene resin in the layer B) is a polymer including a styrenic monomer as an essential monomer component. Specifically, the polystyrene resin is a polymer including a styrenic-monomer-derived constitutional unit in the molecule (per molecule).

The polystyrene resin may be a homopolymer or a copolymer.

The styrenic monomer is exemplified by, but not limited to, styrene, $\alpha$-methylstyrene, m-methylstyrene, p-methylstyrene, p-ethylstyrene, p-isobutylstyrene, p-t-butylstyrene, and chloromethylstyrene. Among them, styrene is preferred from the viewpoints typically of availability and material price. Each of different styrenic monomers may be used alone or in combination.

The polystyrene resin (namely, the polystyrene resin in the layer B) is exemplified by, but not limited to, homopolymers of a styrenic monomer, such as general purpose polystyrenes (GPPS) as a styrene homopolymer; and copolymers such as a copolymer including two or more styrenic monomers alone as monomer components, a styrene-diene copolymer, a hydrogenated styrene-diene copolymer, and a copolymer of styrene and a polymerizable unsaturated carboxylic acid ester. Among them, the styrene-diene copolymer is preferred.

The styrene-diene copolymer is a copolymer including a styrenic monomer and a diene (in particular, a conjugated diene) as essential monomer components. Specifically, the styrene-diene copolymer is a polymer including a styrenic-monomer-derived constitutional unit and a diene-derived (in particular, a conjugated-diene-derived) constitutional unit in the molecule (per molecule).

The diene is preferably, but not limited to, a conjugated diene such as 1,3-butadiene, isoprene (2-methyl-1,3-butadiene), 2,3-dimethyl-1,3-butadiene, 1,3-pentadiene, 1,3-hexadiene, and chloroprene. Among them, 1,3-butadiene is particularly preferred. Each of different dienes may be used alone or in combination.

Monomer components constituting the styrene-diene copolymer may further include another monomer component than the styrenic monomers and the dienes. Such other monomer components than the styrenic monomers and the dienes are exemplified by vinyl monomers, polymerizable unsaturated carboxylic acid esters, and polymerizable unsaturated carboxylic acid anhydrides.

The styrene-diene copolymer may be a copolymer of any form not limited, but may be a copolymer selected from a random copolymer, a block copolymer, and an alternating copolymer. In particular, the styrene-diene copolymer is preferably a block copolymer such as S-D, S-D-S, D-S-D, and S-D-S-D copolymers, where S represents a styrene block and D represents a diene block.

Specifically, the styrene-diene copolymer is exemplified by a styrene-butadiene-styrene block copolymer (SBS), a styrene-isoprene-styrene block copolymer (SIS), and a styrene-butadiene/isoprene-styrene block copolymer (SBIS). Among them, SBS is preferred. Each of different copolymers may be used alone or in combination.

The polystyrene resin in the layer B (all polystyrene resin(s) in the layer B) includes a styrenic-monomer-derived constitutional unit in a content of from 50 to 80 percent by weight (from 50 percent by weight to 80 percent by weight) and preferably from 60 to 80 percent by weight, based on the total weight (100 percent by weight) of all the polystyrene resin(s) in the layer B. The control of the content to 80 percent by weight or less may allow the polystyrene resin in the layer B and, in turn, the layer B itself to be soft (flexible) and allow the shrink film to have higher interlaminar strengths, in particular, a higher interlaminar strength at room temperature. In contrast, if the content is less than 50 percent by weight, the layer B may become excessively soft (flexible) and may cause the shrink film to exhibit a lower interlaminar strength upon shrink processing (upon heating) and to be susceptible to delamination upon shrink processing.

The polystyrene resin in the layer B (all polystyrene resin(s) in the layer B) includes a diene-derived constitutional unit in a content of from 20 percent by weight to less than 50 percent by weight and preferably from 20 to 40 percent by weight, based on the total weight (100 percent by weight) of all the polystyrene resin(s) in the layer B. In particular, the polystyrene resin in the layer B preferably includes a constitutional unit derived from a conjugated diene in a content within the range. The control of the content to 20 percent by weight or more allows the polystyrene resin in the layer B and, in turn, the layer B itself to be soft (flexible) and may allow the shrink film to have better interlaminar strengths, in particular a higher interlaminar strength at room temperature. In contrast, if the content is 50 percent by weight or more, the layer B may become excessively soft and may cause the shrink film to have a lower interlaminar strength upon shrink processing (upon heating) and to be susceptible to delamination upon shrink processing.

In an embodiment, the polystyrene resin in the layer B is a resin mixture including two or more polystyrene resins. In this embodiment the "content of a styrenic-monomer-derived constitutional unit" and the "content of a diene-derived constitutional unit" each refer to a content in the resin mixture.

The polystyrene resin (namely, the polystyrene resin in the layers B) may also be selected from commercial products. The commercial products are exemplified by Styrolux T (an SBS) supplied by BASF SE and L462 (an SBS) supplied by Asahi Kasei Corporation.

The polypropylene resin (namely, the polypropylene resin in the layer B) is a polymer including propylene as an essential monomer component. Specifically, the polypropylene resin is a polymer including a constitutional unit derived from propylene in the molecule (per molecule). The polypropylene resin is exemplified by, but not limited to, propylene homopolymers (homopolypropylenes); and propylene copolymers, i.e., copolymers including propylene and one or more olefins (olefins excluding propylene) as essential monomer components. Of such propylene copolymers, preferred are propylene-$\alpha$-olefin copolymers, i.e., copolymers including propylene and one or more $\alpha$-olefins as essential monomer components. The propylene copolymers are each a copolymer including a constitutional unit derived from propylene and a constitutional unit derived from an olefin in the molecule (per molecule). The propylene-$\alpha$-olefin copolymers are each a copolymer including a constitutional unit derived from propylene and a constitutional unit derived from an $\alpha$-olefin in the molecule (per molecule). The $\alpha$-olefins to be used as comonomer components in the propylene-$\alpha$-olefin copolymers are exemplified by ethylene; and $C_4$-$C_{20}$ $\alpha$-olefins such as 1-butene, 1-pentene, 4-methyl-1-pentene, 1-hexene, 1-heptene, 1-octene, 1-nonene, and 1-decene. Each of different $\alpha$-olefins may be used alone or in combination. The propylene copolymers (e.g., propylene-$\alpha$-olefin copolymers) may each be a block copolymer or a random copolymer.

Of the propylene copolymers, particularly preferred is an ethylene-propylene random copolymer including ethylene as a comonomer component. The ethylene-propylene random copolymer is also referred to as a "propylene-ethylene random copolymer". The ethylene-propylene random copolymer may have a ratio (weight ratio) of ethylene to propylene within the range of from about 2:98 to about 5:95, and preferably from about 3:97 to about 4.5:95.5. The propylene copolymer (in particular, ethylene-propylene random copolymer) is preferably one having an isotactic index of 90% or more from the viewpoints of low-temperature shrinkability and stiffness of the shrink film.

The polypropylene resin (namely, the polypropylene resin in the layer B) is preferably a metallocene-catalyzed polypropylene resin, i.e., a polypropylene resin prepared by polymerization catalyzed by a metallocene catalyst. This is preferred from the viewpoint of filming/processing suitability. The metallocene catalyst for use herein may be selected from known or common metallocene catalysts for olefin polymerization. The polypropylene resin may be polymerized (copolymerized) by a process which is not limited and may be selected from known polymerization processes such as slurry polymerization, solution polymerization, and vapor-phase polymerization.

Of the polymers described above, preferred as the polypropylene resin are metallocene-catalyzed homopolypropylenes; and metallocene-catalyzed propylene-$\alpha$-olefin copolymers (of which metallocene-catalyzed propylene-$\alpha$-olefin random copolymers are more preferred, and metallocene-catalyzed propylene-ethylene random copolymers are more preferred).

The polypropylene resin (polypropylene resin in the layer B) may have a propylene content of preferably from 50 to 100 percent by weight and more preferably from 60 to 100 percent by weight based on the total weight (100 percent by weight) of the polypropylene resin. The propylene content corresponds to the content of a propylene-derived constitutional unit in the polypropylene resin.

The polypropylene resin (polypropylene resin in the layer B) may also be selected from commercial products. Such commercial products are commercially available typically as WINTEC WFX6 (metallocene-catalyzed propylene-ethylene random copolymer) from Japan Polypropylene Corporation; and ZELAS #7000 and ZELAS #5000 each from Mitsubishi Chemical Corporation.

The layer B may contain the polystyrene resin in a content of from 20 to 80 percent by weight based on the total weight (100 percent by weight) of the layer B. The layer B, if containing the polystyrene resin in a content of less than 20 percent by weight, may suffer from a lower interlaminar strength with respect to the layer A. In contrast, the layer B, if containing the polystyrene resin in a content of greater than 80 percent by weight, may suffer from a lower interlaminar strength with respect to the layer C. To allow the shrink film to have a low specific gravity, the content is preferably from 20 to 50 percent by weight, more preferably from 25 to 45 percent by weight, and furthermore preferably from 30 to 40 percent by weight. In an embodiment, the layer B includes two or more polystyrene resins. In this embodiment, the "content of the polystyrene resin in the layer B" refers to "the total sum of contents of all the polystyrene resin(s) in the layer B". In particular, the layer B preferably includes one or more styrene-diene copolymers in a content within the range.

The layer B contains the polypropylene resin in a content of from 20 to 80 percent by weight based on the total weight (100 percent by weight) of the layer B. The layer B, if containing the polypropylene resin in a content of less than 20 percent by weight, may have a lower interlaminar strength with respect to the layer C. In contrast, the layer B, if containing the polypropylene resin in a content of greater than 80 percent by weight, may have a lower interlaminar strength with respect to the layer A. To allow the shrink film to have a low specific gravity, the content is preferably from 35 to 60 percent by weight, more preferably from 40 to 55 percent by weight, and furthermore preferably from 45 to 55 percent by weight. In an embodiment, the layer B (each layer B) includes two or more polypropylene resins. In this embodiment, the "content of the polypropylene resin in the layer B" refers to "the total sum of contents of all the polypropylene resins in the layer B".

The layer B may further include a polyethylene resin so as to allow the shrink film to have better fittability to a container upon thermal shrinkage. The polyethylene resin (namely, polyethylene resin in the layer B) is a polymer including ethylene as an essential monomer component. Specifically, the polyethylene resin is a polymer including a constitutional unit derived from ethylene in the molecule (per molecule). The polyethylene resin is not limited and may be selected from known or common polyethylenes such as low-density polyethylenes (LDPEs), linear low-density polyethylenes (LLDPEs), ultralow-density polyethylenes, medium-density polyethylenes, and high-density polyethylenes (HDPEs). Among them, preferred are low-density polyethylenes (including linear low-density polyethylenes and ultralow-density polyethylenes) having a density of less than 0.930 (g/cm$^3$), of which linear low-density polyethylenes are particularly preferred; and metallocene-catalyzed LLDPEs, i.e., linear low-density polyethylenes prepared by metallocene-catalyzed polymerization are most preferred. Each of different polyethylene resins may be used alone or in combination. The polyethylene resins for use herein may also be selected from commercial products. Such commercial products are commercially available typically as 2040FC as an LLDPE from UBE-MARUZEN POLYETHYLENE CO., LTD.; KERNEL KF380, KERNEL KF260T, and KERNEL KS340T each from Japan Polyethylene Corporation; and Evolue SP2040 from Prime Polymer Co., Ltd.

The layer B may contain the polyethylene resin in a content of preferably from 1 to 10 percent by weight and more preferably from 1 to 5 percent by weight, based on the total weight (100 percent by weight) of the layer B.

The layer B may further include one or more polymeric plasticizers so as to allow the shrink film to have better shrinkability. The polymeric plasticizers are exemplified by rosinous resins such as rosin, polymerized rosin, hydrogenated rosin, and derivatives of them, as well as resin acid dimers; terpenic resins such as terpene resins, aromatic modified terpene resins, hydrogenated terpene resins, and terpene-phenol resins; and petroleum resins such as aliphatic petroleum resins, aromatic petroleum resins, and alicyclic petroleum resins. Among them, petroleum resins are preferred. Each of different polymeric plasticizers may be used alone or in combination. The polymeric plasticizers are also commercially available typically as ARKON from Arakawa Chemical Industries, Ltd.; Clearon from Yasuhara Chemical Co., Ltd.; and I-MARV from Idemitsu Kosan Co., Ltd.

Where necessary, the layer B may further include one or more other components (additional components) than those mentioned above. Such additional components are exemplified by lubricants, fillers, thermal stabilizers, antioxidants, ultraviolet absorbers, antistatic agents, flame retardants, colorants, and pinning agents (alkaline earth metals).

The layer B may include a recovered material (recycled material) within a range not adversely affecting advantageous effects of the present invention. In this case, the layer B may include the recycled material in a content of preferably from 1 to 75 percent by weight and more preferably from 1 percent by weight to less than 50 percent by weight, based on the total weight (100 percent by weight) of the layer B. This is preferred from the viewpoint of recyclability. The recycled material is preferably one formed upon the production of the shrink film according to the present invention, i.e., a so-called self-recovered material.

Layer C

The layer C is a resin layer including a polypropylene resin. Each of different polypropylene resins may be used alone or in combination.

The polypropylene resin (namely, polypropylene resin in the layer C) is a polymer including propylene as an essential monomer component. Specifically, the polypropylene resin is a polymer including a constitutional unit derived from propylene in the molecule (per molecule). The polypropylene resin is exemplified by propylene homopolymers (homopolypropylenes); and propylene copolymers, i.e., copolymers including propylene and one or more olefins (olefins excluding propylene) as essential monomer components. Of the propylene copolymers, preferred are propylene-$\alpha$-olefin copolymers, i.e., copolymers including propylene and one or more $\alpha$-olefins as essential monomer components. The propylene copolymers are each a copolymer including a constitutional unit derived from propylene and a constitutional unit derived from an olefin in the molecule (per molecule). The propylene-$\alpha$-olefin copolymers are each a copolymer including a constitutional unit derived from propylene and a constitutional unit derived from an $\alpha$-olefin in the molecule (per molecule). The $\alpha$-olefins for use as comonomer components to form the propylene-$\alpha$-olefin copolymers are exemplified by ethylene; and $C_4$-$C_{20}$ $\alpha$-olefins such as 1-butene, 1-pentene, 4-methyl-1-pentene, 1-hexene, 1-heptene, 1-octene, 1-nonene, and 1-decene. Each of different $\alpha$-olefins may be used alone or in combination. The propylene copolymers (e.g., propylene-$\alpha$-olefin copolymers) may each be a block copolymer or a random copolymer.

Of the propylene copolymers, particularly preferred is an ethylene-propylene random copolymer including ethylene as a comonomer component. The ethylene-propylene random copolymer is also referred to as a propylene-ethylene random copolymer. The ethylene-propylene random copolymer may have a ratio (weight ratio) of ethylene to propylene within the range of from about 2:98 to about 5:95 and preferably from about 3:97 to about 4.5:95.5. The propylene copolymers (in particular, ethylene-propylene random copolymers) are each preferably one having an isotactic index of 90% or more. This is preferred from the viewpoints of low-temperature shrinkability and stiffness of the shrink film.

The polypropylene resin (namely, polypropylene resin in the layer C) is preferably a metallocene-catalyzed polypropylene resin, i.e., a polypropylene resin prepared by polymerization catalyzed by a metallocene catalyst. This is preferred so as to allow the shrink film to have better low-temperature shrinkability at a temperature of from about 60°C to about 80°C and better fittability to a container upon thermal shrinkage. The metallocene catalyst for use herein may be selected from known or common metallocene catalysts for olefin polymerization. The polypropylene resin may be polymerized (or copolymerized) by any process which is not limited and may be selected from known polymerization processes such as slurry polymerization, solution polymerization, and vapor-phase polymerization.

Of the polypropylene resins, preferred are metallocene-catalyzed homopolypropylenes; and metallocene-catalyzed propylene-$\alpha$-olefin copolymers (of which metallocene-catalyzed propylene-$\alpha$-olefin random copolymers are more preferred, and metallocene-catalyzed propylene-ethylene random copolymers are particularly preferred).

The polypropylene resin (polypropylene resin in the layer C) may contain propylene in a content of preferably from 50 to 100 percent by weight and more preferably from 60 to 100 percent by weight, based on the total weight (100 percent by weight) of the polypropylene resin. This is preferred from the viewpoints of the shrinkability, strengths, and specific gravity of the shrink film. The propylene content corresponds to the content of a constitutional unit derived from propylene in the polypropylene resin.

The polypropylene resin may have a weight-average molecular weight of preferably from $10 \times 10^4$ to $50 \times 10^4$ and more preferably from $20 \times 10^4$ to $40 \times 10^4$ so as to control the melting behavior(s) of the resin(s) constituting the layer C within a preferred range.

The polypropylene resin (polypropylene resin in the layer C) for use herein may also be selected from commercial products. The commercial products are commercially available typically as WINTEC WFX6 (metallocene-catalyzed propylene-ethylene random copolymer) from Japan Polypropylene Corporation; and ZELAS #7000 and ZELAS #5000 each from Mitsubishi Chemical Corporation.

The layer C may contain the polypropylene resin in a content of 50 percent by weight or more (from 50 to 100 percent by weight), preferably from 55 to 95 percent by weight, more preferably from 55 to 90 percent by weight, and furthermore preferably from 55 to 85 percent by weight, based on the total weight (100 percent by weight) of the layer C. The layer C, as containing the polypropylene resin in a content of 50 percent by weight or more, allows the shrink film to have a low specific gravity and to exhibit better shrinkability. In an embodiment, the layer C includes two or more polypropylene resins. In this embodiment, the "content of the polypropylene resin in the layer C" refers to "the total sum of contents of all the polypropylene resins in the layer C.

The layer C may include a polyethylene resin so as to allow the shrink film to resist film tearing and to exhibit better shrink processability. The polyethylene resin (namely, polyethylene resin in the layer C) is a polymer including ethylene as an essential monomer component. Specifically, the polyethylene resin is a polymer including a constitutional unit derived from ethylene in the molecule (per molecule). The polyethylene resin for use herein is not limited and may be selected from known or common polyethylenes such as low-density polyethylenes (LDPEs), linear low-density polyethylenes (LLDPEs), ultralow-density polyethylenes, medium-density polyethylenes, and high-density polyethylenes (HDPEs). Among them, preferred are low-density polyethylenes (including linear low-density polyethylenes and ultralow-density polyethylenes) having a density of less than 0.930 $(g/cm^3)$, of which linear low-density polyethylenes are particularly preferred; and metallocene-catalyzed LLDPEs, i.e., linear low-density polyethylenes prepared by metallocene-catalyzed polymerization are most preferred. Each of different polyethylene resins may be used alone or in combination. The polyethylene resin for use herein may also be selected from commercial products. The commercial products are commercially available typically as 2040FC (an LLDPE) from

UBE-MARUZEN POLYETHYLENE CO.,LTD.; KERNEL KF380, KERNEL

KF260T, and KERNEL KS340T each from Japan Polyethylene Corporation; and Evolue SP2040 from Prime Polymer Co., Ltd.

The layer C may contain the polyethylene resin in a content of preferably from 1 to 10 percent by weight and more preferably from 1 to 5 percent by weight, based on the total weight (100 percent by weight) of the layer C.

The layer C may include a polymeric plasticizer so as to allow the shrink film to have better shrinkability. The polymeric plasticizer is exemplified by rosinous resins such as rosins, polymerized rosins, hydrogenated rosins, and derivatives of them, as well as resin acid dimers; terpenic resins such as terpene resins, aromatic modified terpene resins, hydrogenated terpene resins, and terpene-phenol resins; and petroleum resins such as aliphatic petroleum resins, aromatic petroleum resins, and alicyclic petroleum resins. Among them, petroleum resins are preferred. Each of different polymeric plasticizers may be used alone or in combination. The polymeric plasticizers may also be selected from commercial products. Such commercial products are commercially available typically as ARKON from Arakawa Chemical Industries, Ltd.; Clearon from Yasuhara Chemical Co., Ltd.; and I-MARV from Idemitsu Kosan Co., Ltd..

Assume that the layer C includes a polymeric plasticizer. In his case, the layer C may contain the polymeric plasticizer (in particular, petroleum resin) in a content of preferably from 5 to 30 percent by weight and more preferably from 10 to 25 percent by weight, based on the total weight (100 percent by weight) of the layer C. The layer C, if containing the polymeric plasticizer in a content of greater than 30 percent by weight, may cause the shrink film to become brittle. In contrast, the layer C, if containing the polymeric plasticizer in a content of less than 5 percent by weight, may fail to enjoy sufficient effects of the polymeric plasticizer as added.

Where necessary, the layer C may further include one or more components (additional components) other than those mentioned above. The additional components are exemplified by lubricants, fillers, thermal stabilizers, antioxidants, ultraviolet absorbers, antistatic agents, flame retardants, colorants, and pinning agents (alkaline earth metals).

In an embodiment, the layer C may include a recycled material within a range not adversely affecting advantageous effects of the present invention. In this embodiment, the layer C may contain the recycled material in a content of preferably from 1 to 75 percent by weight and more preferably from 1 percent by weight to less than 50 percent by weight based on the total weight (100 percent by weight) of the layer C. This is preferred from the viewpoints of recyclability and shrinkability. As used herein the term "recycled material" refers to a recycled or recovered material including non-product portions such as film residues formed upstream and downstream from the step of producing film products, and film edges; and film scraps and polymer scraps, such as residual portions of intermediate products from which the product films have been cut, and substandard products. The recycled material is preferably one formed through the production of the shrink film according to the present invention (so-called self-recovered material).

Shrink Film

The shrink film according to the present invention includes a multilayer structure including the layers A, B, C, B, and A disposed in the specified sequence [layer A/layer B/layer C/layer B/layer A] without the mediation of another layer. The multilayer structure includes five layers of three kinds (the layers A, B, and C). The shrink film according to the present invention is preferably, but not limited to, a multilayer shrink film including five layers of three kinds, i.e., the layers A, B, C, B, and A disposed in the specified sequence. More specifically, the term "layers A, B, C, B, and A disposed in the specified sequence without the mediation of another layer" refers to that the layers B are disposed on both sides of the layer C without mediation of another layer (e.g., an adhesives layer) between the layers B and the layer C; and the layers A are disposed each on the side of each layer B opposite to the layer C without the mediation of another layer (e.g., an adhesive layer) between the layer A and the layer B.

The multilayer structure of five layers of three kinds, including the layers A, B, C, B, and A disposed in the specified sequence, is preferably formed by coextrusion.

The shrink film according to the present invention may be an oriented film (uniaxially oriented film, biaxially-oriented film, or multiaxially-oriented film) from the viewpoint of shrinkability. Preferably, all the layers A, B, and C in the shrink film according to the present invention are oriented. The shrink film, if including the resin layers all of which are not oriented, may fail to have good shrinkability. The shrink film according to the present invention is preferably, but not limited to, a uniaxially oriented film or biaxially-oriented film, more preferably a film strongly oriented in one direction [in particular, in a film transverse direction (cross-machine direction)], and particularly preferably an oriented film approximately uniaxially oriented in the transverse direction. In a shrink sleeve label (cylindrical shrink label), the transverse direction corresponds to a label circumferential direction. The shrink film may also be an approximately longitudinally uniaxially oriented film that is strongly oriented in a film machine direction (direction perpendicular to the transverse direction).

The layers A in the shrink film according to the present invention may each independently have a thickness (thickness as a single layer) not limited, but preferably from 1 to 20 $\mu$m and more preferably from 3 to 15 $\mu$m. The layers A, if each having a thickness of greater than 20 $\mu$m, may cause the shrink film to have a high specific gravity and to fail to attain a low specific gravity. In contrast, the layers A, if each having a thickness of less than 1 $\mu$m, may cause the shrink film to have lower shrinkability (to have a lower thermal shrinkage percentage).

The layers B in the shrink film according to the present invention may each independently have a thickness (thickness as a single layer) not critical, but preferably from 1 to 20 $\mu$m and more preferably from 3 to 15 $\mu$m. The layers B, if each having a thickness of greater than 20 $\mu$m, may cause the shrink film to have a higher specific gravity and to fail to attain a low specific gravity. In contrast, the layers B, if each having a thickness of less than 1 $\mu$m, may cause the shrink film to exhibit lower interlaminar strengths.

Each of the layers A preferably has a thickness (thickness as a single layer) equal to or larger than the thickness (thickness as a single layer) of each of the layers B so as to offer high shrinkability.

The layer C in the shrink film according to the present invention may have a thickness (thickness as a single layer) not critical, but preferably from 10 to 70 $\mu$m and more preferably from 15 to 50 $\mu$m. The shrink film, if having a thickness of the layer C of greater than 70 $\mu$m, may have a lower thermal shrinkage percentage. In contrast, the shrink film, if having a thickness of the layer C of less than 10 $\mu$m, may have an excessively large difference in shrinkage stress between the layer C and the layers A, may thereby fail to resist delamination upon shrink processing, or may be finished unsatisfactorily due to occurrence of quick shrinkage.

The shrink film according to the present invention may have a percentage of the thickness of all the layers A (total sum of thicknesses of all the layers A) of preferably from 5% to 40% and more preferably from 10% to 30% of the total thickness (100%) of the shrink film. If the percentage is less than 5%, the shrink film may have lower shrinkability (may have a lower thermal shrinkage percentage). In contrast, if the percentage is greater than 40%, the shrink film may have a high specific gravity to fail to attain a low specific gravity, and/or may suffer from delamination upon shrink processing.

The shrink film according to the present invention may have a percentage of the thickness of all the layers B (total sum of thicknesses of all the layers B) of preferably from 5% to 25% and more preferably from 10% to 25% of the total thickness (100%) of the shrink film. If the percentage is less than 5%, the shrink film may suffer from delamination before or after shrink processing. In contrast, if the percentage is greater than 25%, the shrink film may have lower shrinkability (may have a lower thermal shrinkage percentage), and/or may have a high specific gravity to fail to attain a low specific gravity.

The shrink film according to the present invention may have a percentage of the thickness of the layer C of preferably from 50% to 80% and more preferably from 50% to 70% based on the total thickness (100%) of the shrink film. If the percentage is less than 50% (if the layer C has an excessively small thickness), the shrink film may have a high specific gravity to fail to attain a low specific gravity. In contrast, if the percentage is greater than 80% (if the layer C has an excessively large thickness), the shrink film may have lower shrinkability (may have a lower thermal shrinkage percentage).

The shrink film according to the present invention may have a total thickness not critical, but preferably from 20 to 100 $\mu$m, more preferably from 20 to 80 $\mu$m, and furthermore preferably from 20 to 60 $\mu$m.

The shrink film according to the present invention (before shrink processing) may have an interlaminar strength at 23°C (room temperature) of preferably 1.0 (N/15 mm) or more and more preferably 1.4 (N/15 mm) or more. This interlaminar strength is hereinafter also referred to as "room-temperature interlaminar strength". The shrink film, if having a room-temperature interlaminar strength of less than 1.0 (N/15 mm), may suffer from separation (delamination) between adjacent resin layers upon a processing process such as printing and shaping into a sleeve form (i.e., upon production process of the shrink label). This may cause lower productivity and/or a disadvantage in quality. As used herein the term "interlaminar strength" refers to a strength between adjacent layers with the lowest interlaminar strength in the shrink film in a T-peel test (in conformity to JIS K 6854-3, at a tensile speed of 200 mm/min).

The shrink film according to the present invention (before shrink processing) may have a thermal shrinkage percentage at 90°C for 10 seconds (hot water treatment) in a main orientation direction not critical, but preferably 45% or more and more preferably from 45% to 80%. This thermal shrinkage percentage is hereinafter also referred to as a "thermal shrinkage percentage (90°C, 10 sec)". The shrink film, if having a thermal shrinkage percentage (90°C, 10 sec) of less than 45%, may cause the shrink label to shrink insufficiently and to hardly conform to the shape of a container in a process of applying heat to the shrink label to bring the same into intimate contact with the container. In this case, the shrink label may suffer from inferior finished quality particularly when the container has a complicated shape. The term "main orientation direction" refers to a direction in which stretching (drawing) is mainly performed (direction in which the thermal shrinkage percentage is highest) and is generally a machine direction or a transverse direction. For example, in a film approximately uniaxially oriented in the transverse direction (approximately transversely uniaxially oriented film), the main orientation direction is the transverse direction.

The shrink film according to the present invention (before shrink processing) may have a thermal shrinkage percentage (90°C, 10 sec) in a direction perpendicular to the main orientation direction not critical, but preferably from -5% to 10%.

The shrink film according to the present invention (before shrink processing) may have a density (specific gravity) not critical, but preferably 0.97g/cm$^3$ or less (e.g., from 0.90 to 0.97 g/cm$^3$) and more preferably from 0.90 to 0.95 g/cm$^3$. The shrink film, when having a density (specific gravity) of 0.97 g/cm$^3$ or less, becomes lightweight, thus being preferable. This shrink film is also preferred because the shrink film, when used as or in a shrink label, may allow the shrink label to be easily separated from the container (e.g., PET bottle) using the difference in specific gravity upon recycling (upon collection).

The shrink film according to the present invention may have a haze of preferably less than 15%, more preferably less than 7.0%, and furthermore preferably less than 5.0%. The "haze" herein is a value as measured in conformity to JIS K 7105 in terms of 40 $\mu$m thick, and is indicated in percent (%). Assume that the shrink film has a haze of 15% or more and is used in a shrink label by applying a print to an inner side of the shrink film, and the print is to be seen through the shrink film, where the inner side is a side to face a container when the label is attached to the container. In this case, when the shrink label is processed into a product (as attached to the container), the print may look hazed and the shrink label may offer inferior decorativeness. However, the shrink film, even if having a haze of 15% or more, is sufficiently usable in other applications than the above one in which the print is to be seen through the shrink film.

The shrink film according to the present invention is preferably prepared by melt film forming. The multilayer structure is preferably formed by coextrusion (multilayer extrusion). Specifically, the shrink film according to the present invention is preferably produced by melt extrusion (in particular, coextrusion). More specifically, the shrink film according to the present invention is preferably produced by forming an unstretched film (unstretched sheet) by melt extrusion (coextrusion), and stretching the unstretched film. In addition, the shrink film surface may be subjected to a common surface treatment, such as corona discharge treatment, according to necessity.

In an embodiment, a material mixture is used as a material to form each resin layer (e.g., the layer A, B, or C) of the shrink film. In this embodiment, individual components may be mixed or blended by a process not limited. Typically, the components may be blended by dry blending to give the material mixture, or the components may be melted and kneaded using a single-screw or twin-screw kneader to give the material mixture. The material mixture preparation may employ master pellets. The master pellets may be prepared typically by blending specific components in relatively high concentrations.

In the melt extrusion (coextrusion), materials (resins or resin compositions) to form individual resin layers (e.g., the layers A, B, and C) are charged into two or more extruders set at predetermined temperatures, and the molten materials are extruded (coextruded) typically from a T-die or circular die. In this case, a predetermined layer structure is preferably obtained using a manifold and/or feedblocks. Where necessary, the feed amounts of the individual materials may be adjusted with a gear pump. In addition, the process preferably employs a filter to remove a foreign substance. This is preferred for reducing film break. The extrusion temperatures may vary depending on the types of materials to be used and are not critical. However, the materials to form the individual resin layers are preferably molded in temperature ranges adjacent to one another. Namely, the extrusion temperatures to form the individual resin layers are preferably adjacent to each other. Specifically, the extrusion temperature for the materials to form the layer A is preferably defined within the range of from 180°C to 240°C, the extrusion temperature for the materials to form the layer B is preferably defined within the range of from 180°C to 240°C, and the extrusion temperature for the materials to form the layer B is preferably defined within the range of from 180°C to 240°C. The temperatures of a merging section and the die are preferably defined within the range of from 200°C to 240°C. The coextruded polymers may be rapidly cooled typically on a cooling drum (cooling roll) to yield an unstretched multilayer film (sheet).

The unstretched multilayer film, when stretched, can give an oriented film such as uniaxially oriented film or biaxially oriented film. The stretching may be selected according to the desired orientation and may be biaxial stretching in a machine direction and a transverse direction, or uniaxial stretching in the machine direction or transverse direction. The machine direction is a film production line direction and is also referred to as "longitudinal direction" or "MD". The transverse direction is a direction perpendicular to the machine direction and is also referred to as "cross direction" or "TD". The stretching may be performed by any technique such as roll, tenter, or tube stretching. The stretching may be performed under any conditions which may vary depending on the types of the materials to be used and required properties of the shrink film. In general, the stretching is preferably performed at a stretching temperature of from 70°C to 110°C (more preferably from 70°C to 95°C) in at least one of the machine direction and the transverse direction at a draw ratio of from about 2 to about 8. Typically, to form a film approximately uniaxially stretched in the transverse direction, the stretching is preferably performed by stretching the unstretched shrink film in the machine direction at a draw ratio of from about 1.01 to about 1.5 (preferably from about 1.05 to about 1.3) according to necessity, and then stretching the film in the transverse direction at a draw ratio of from about 2 to about 7 (preferably from about 3 to about 6.5, and more preferably from about 4 to about 6).

In the shrink film according to the present invention, the layers A each include a polystyrene resin as a principal component, where the polystyrene resin has a high content of a styrenic-monomer-derived constitutional unit and a low content of a diene-derived constitutional unit and is relatively hard or rigid. The layers A, as having the composition, are highly shrinkable. The shrink film according to the present invention, as including the layers A, has better shrinkability (has a higher thermal shrinkage percentage) and, when incorporated or formed into a shrink label (in particular shrink sleeve label), allows the shrink label to exhibit good fittability to the container and to have good finished quality. In particular, the shrink label exhibits excellent fittability even when the container has a complicated shape.

The layer C includes a polypropylene resin having a low specific gravity as a principal component. The shrink film, as including the layer C, can have a low specific gravity and be lightweight. In addition, the shrink label including the shrink film according to the present invention can be easily separated from the container (e.g., PET bottle) by using the difference in specific gravity upon recovery (collection) and exhibits excellent recyclability.

However, the polystyrene resin constituting the layers A and the polypropylene resin constituting the layer C have poor affinity for each other. In general, a film including the layer A and the layer C directly laminated on each other is susceptible to delamination between the two layers. In addition, the polystyrene resin constituting the layers A and the polypropylene resin constituting the layer C significantly differ from each other in thermal shrinkage behavior. The multilayer shrink film including the layers A and C directly laminated on each other, when subjected to shrink processing (heat shrink processing), may be still more susceptible to delamination due to the difference in thermal shrinkage behavior between the layer A and the layer C. In contrast, an attempt was made to provide an intermediate layer between the layer A and the layer C so as to offer a higher interlaminar strength, where the intermediate layer includes a resin mixture of the polystyrene resin for use in the layer A and the polypropylene resin for use in the layer C. However, the intermediate layer failed to offer sufficient interlaminar strengths. This is probably because of the poor affinity between the polystyrene resin and the polypropylene resin.

Under these circumstances, the present inventors made further investigations and found a specific resin layer (layer B) disposed between the layer A and the layer C can give an excellent multilayer shrink film having higher interlaminar strengths. The specific resin layer (layer B) includes a polystyrene resin and a polypropylene resin in specific proportions, where the polystyrene resin is relatively soft because of having a lower content of a styrenic-monomer-derived constitutional unit and a higher content of a diene-derived constitutional unit as compared with the polystyrene resin to be used in the layer A. The layers B in the shrink film according to the present invention each include the polystyrene resin and the polypropylene resin in amounts at specific levels or higher and thereby have high adhesiveness both to the layer A and the layer C, where the layer A includes a polystyrene resin as a principal component, and the layer C includes a polypropylene resin as a principal component. The polystyrene resin in the layers B mainly affects the flexibility of the layers B. This polystyrene resin has a content of a styrenic-monomer-derived constitutional unit and a content of a diene-derived constitutional unit within specific ranges. This allows the layers B to have flexibility within an appropriate range. Accordingly, the shrink film according to the present invention has high interlaminar strengths both at room temperature and at an elevated temperature (upon shrink processing).

Shrink Label

The shrink film according to the present invention is preferably usable as or in a shrink label.

As used herein the term "shrink label according to the present invention" refers to a shrink label that includes the shrink film according to the present invention. The shrink label according to the present invention is exemplified by a shrink label including the shrink film according to the present invention (as a substrate) and a print layer disposed on or over at least one side of the shrink film. The shrink label according to the present invention may include one or more other layers in addition to the print layer. Such other layers may be selected from protective layer, anchor coat layer, primer coat layer, adhesives layer (e.g., pressure-sensitive adhesives layer and heat-sensitive adhesives layer), and coating layer; as well as layers typically of a nonwoven fabric or paper. The shrink label according to the present invention may have a layer structure typically preferably of [print layer/layer A/layer B/layer C/layer B/layer A] and [print layer/layer A/layer B/layer C/layer B/layer A/print layer]. The shrink film according to the present invention by itself is usable as a shrink label even when no print layer is provided. Specifically, the shrink label according to the present invention may act as a shrink label including the shrink film according to the present invention alone.

The print layer is a layer that indicates an item such as a trade name, an illustration, and handling precautions.

The print layer may be formed typically by coating the shrink film with a printing ink. The coating is preferably performed by off-line coating from the viewpoints typically of productivity and processability. In the off-line coating, the coating is performed by a known or common printing technique after the film-formation of the shrink film. The printing technique may be a common technique and is preferably selected typically from gravure printing and flexographic printing. The printing ink used to form the print layer may include, for example, a pigment, a binder resin, a solvent, and other additives. The binder resin for use herein is exemplified by, but not limited to, acrylic resins, urethane resins, polyamide resins, vinyl chloride-vinyl acetate copolymer resins, cellulosic resins, and nitrocellulose resins. The pigment is exemplified by, but not limited to, white pigments such as titanium oxide (titanium dioxide); indigo blue pigments such as copper phthalocyanine blue; and other coloring pigments such as carbon black, aluminum flake, and mica. These pigments may be selected and used according to an intended purpose. The pigment may also be selected from extender pigments typically for gloss adjustment. The extender pigments are exemplified by alumina, calcium carbonate, barium sulfate, silica, and acrylic beads. The solvent may be selected from solvents generally used in printing inks, which are exemplified by organic solvents such as toluene, xylenes, methyl ethyl ketone, ethyl acetate, methyl alcohol, ethyl alcohol, and isopropyl alcohol; and water. Each of such pigments, binder resins, and solvents may be used alone or in combination in each category.

The print layer may be, but not limitatively, an active-energy-ray-curable resin layer. This is effective typically in preventing film deformation due to excessive heat. The active energy ray is exemplified by visible light, ultraviolet rays, and electron beams.

The print layer may have a thickness not critical, but preferably from 0.1 to 10 $\mu$m. The print layer, if having a thickness of less than 0.1 $\mu$m, may be difficult to provide uniformly, may have inferior decorativeness due typically to partial "grazing (poor print quality)" and/or may be hardly printed as designed. In contrast, the print layer, if having a thickness of greater than 10 $\mu$m, may consume a large amount of the printing ink to invite higher cost, or may be hardly coated with the printing ink uniformly, or may become brittle to be easily peeled off. In addition, this print layer may become excessively rigid and may hardly conform to or follow the shrinkage of the shrink film during shrink processing.

The shrink label according to the present invention may be used typically as a shrink sleeve label or a roll-on shrink sleeve label. The shrink sleeve label is prepared by sealing both ends of the label with a solvent or an adhesive to be cylindrical (tubular) and is fit around a container. The roll-on shrink sleeve label is used so that the label at one end thereof is affixed to a container, is then wound around the container, and the other end of the label is laid on the one end to allow the label to be cylindrical. Among them, the shrink film according to the present invention is particularly preferably used as or in a shrink sleeve label, because the shrink film according to the present invention is advantageous for suppressing delamination (delamination during fitting) in a seam (a center-sealed portion) upon fitting of the shrink sleeve label around a container. Specifically, the shrink label according to the present invention is preferably a shrink sleeve label.

The shrink label according to the present invention may be processed into a shrink sleeve label. Typically, the shrink label may be shaped into a cylinder (sleeve) so that the main orientation direction of the shrink label be a circumferential direction. Specifically, the shrink label is prepared so as to have a predetermined width in the main orientation direction, both ends of the shrink label in the main orientation direction are overlapped so that the obverse side of the shrink label define an outer surface (outer side) to be shaped into a cylinder (sleeve). The label is coated in an inner surface of one lateral end thereof with a solvent (e.g., tetrahydrofuran (THF)) or an adhesive in a strip about 2 to about 4 mm wide. The solvent or adhesive is hereinafter also referred to as "adhesive or other component". The coated portion with the adhesive or other component is bonded to an outer surface of the other lateral end to yield a shrink sleeve label. It is preferred that no print layer is provided in portions where the adhesive or other component is applied and where bonding is performed. As used herein the term "obverse side" of the shrink label refers to a side from which the label design is seen (a side from which the design is correctly seen). The term "outer surface" of the shrink label refers to a surface not in contact with a container when the shrink label is attached to the container (a surface opposite to the container, namely, the outer side of the cylinder (sleeve)). The term "inner surface" of the shrink label refers to a surface (container-side surface) to be in contact with the container.

In an embodiment, the shrink sleeve label is provided with perforations to cut off the label. In this embodiment, perforations each with a predetermined length at a predetermined pitch may be formed in a direction perpendicular to the circumferential direction. The perforations may be formed by a common procedure. The perforations may be formed typically by pressing a disk-like blade peripherally having cutting edges and non-cutting portions alternately, or by using laser beams. The step of perforating may be provided typically after the printing step, or before or after the step of processing the label to form a sleeve label.

The shrink sleeve label has a seaming strength (a center-sealing strength) of preferably 2 N/15 mm or more. The shrink sleeve label, if having a seaming strength of less than 2 N/15 mm, may be separated at the seam after a processing step or after being formed into a product, and this may cause the label to have lower productivity and/or to be left out from the container.

Though not limited, the shrink label according to the present invention may be fit to a container (e.g., beverage container) to be used as a labeled container (container with the label). The shrink label according to the present invention may also be applied to an adherend other than such container. The shrink label according to the present invention (in particular, shrink sleeve label) may be disposed so as to position the obverse side opposite to the container, be thermally shrunk, and be fit to the container. This gives a labeled container (labeled container bearing the shrink label according to the present invention). The container is exemplified by soft drink bottles such as PET bottles; home-delivered milk bottles; containers for foodstuffs such as seasonings; alcoholic drink bottles; containers for pharmaceutical preparations; containers for chemicals such as detergents and aerosols (sprays); and containers (bowls or cups) for bowl noodle soups. The container may have any of various shapes which are exemplified by, but not limited to, cylindrical or rectangular bottle shapes, and bowl or cup shapes. The container may be made from any material which is exemplified by, but not limited to, plastics such as PETs; glass; and metals.

The labeled container may be prepared typically by fitting the shrink sleeve label onto a predetermined container, and heat-treating the shrink sleeve label to be thermally shrunk and to conform to the container in intimate contact therewith (shrink processing). The heat treatment may be performed typically by a process of allowing the work to pass through a hot-air tunnel or steam tunnel; or a process of heating the work with radiant heat typically as or from infrared rays. In particular, the heat treatment is preferably performed by a process of treating the work with steam at 80°C to 100°C (by allowing the work to pass through a heating tunnel filled with steam and vapor). The heat treatment may be performed for a duration not critical, but preferably from 4 to 20 seconds from the viewpoints of productivity and economic efficiency.

Examples

The present invention will be illustrated in further detail with reference to several examples below. It should be noted, however, that the examples are by no means intended to limit the scope of the present invention. In comparative examples below, a "surface layer", a "core layer", and an "intermediate layer between the surface layer and the core layer" are also respectively referred to as layers A, C, and B for the sake of convenience.

Table 1 indicates data in the examples and comparative examples. Specifically, Table 1 indicates, for example, the resin compositions (resin types and contents (percent by weight)) of the layer A material, layer B material, and layer C material; the contents (percent by weight) of a styrene-derived constitutional unit and of a diene-derived constitutional unit in a polystyrene resin in the layer A; and the contents (percent by weight) of a styrene-derived constitutional unit and of a diene-derived constitutional unit in a polystyrene resin in the layer B. Table 1 also indicates, for example, the total thickness, layer thickness ratio, density (specific gravity), and evaluation results of the resulting shrink films.

Table 2 indicates descriptions (e.g., resin name (trade name), supplier, and resin contents (type)) of resins used in the examples and comparative examples.

Example 1

A material to form the layer A (layer A material) used was 100 percent by weight of a styrene-butadiene-styrene block copolymer (Styrolux S supplied by BASF SE).

Materials to constitute the layer B (layer B materials) used were 30 percent by weight of a styrene-butadiene-styrene block copolymer (Styrolux T supplied by BASF SE), 49 percent by weight of a metallocene-catalyzed propylene-ethylene random copolymer (WINTEC WFX6 supplied by Japan Polypropylene Corporation), 3.5 percent by weight of a linear low-density polyethylene (KERNEL KF260T supplied by Japan Polyethylene Corporation), and 17.5 percent by weight of a petroleum resin (ARKON P125 supplied by Arakawa Chemical Industries, Ltd.). The layer B contained the polystyrene resin in a content of 30 percent by weight and the polypropylene resin in a content of 49 percent by weight.

Materials to constitute the layer C (layer C materials) used were 70 percent by weight of a metallocene-catalyzed propylene-ethylene random copolymer (WINTEC WFX6 supplied by Japan Polypropylene Corporation), 5 percent by weight of a linear low-density polyethylene (KERNEL KF260T supplied by Japan Polyethylene Corporation), and 25 percent by weight of a petroleum resin (ARKON P125 supplied by Arakawa Chemical Industries, Ltd.).

The Styrolux S supplied by BASF SE is a styrene-butadiene-styrene block copolymer (SBS) including a styrene-derived constitutional unit in a content (styrene content) of 88 percent by weight and a butadiene-derived constitutional unit in a content (butadiene content) of 12 percent by weight. The Styrolux T supplied by BASF SE is a styrene-butadiene-styrene block copolymer (SBS) including a styrene-derived constitutional unit in a content (styrene content) of 75 percent by weight and a butadiene-derived constitutional unit in a content (butadiene content) of 25 percent by weight.

The layer A material, the layer B materials, and the layer C materials were respectively charged into extruders "a", "b", and "c" each heated at 210°C. The three extruders were used to perform melt extrusion (coextrusion). Resins extruded from the extruders were merged using a feedblock merging system so that the resin extruded from the extruder "c" constitute a core layer, the resin extruded from the extruder "b" constitute intermediate layers as layers disposed on both sides of the core layer, and the resin extruded from the extruder "a" constitute surface layers as layers disposed on both sides (both outsides) of the intermediate layers. The resins were thus extruded through a T-die with a lip opening of 1 mm, rapidly cooled on a casting drum cooled at 25°C, and yielded a multilayer unstretched film including five layers of three kinds. Upon melt extrusion, the extruders "a", "b", and "c" extruded the resins in a ratio in amount of "a" to "b" to "c" of 1:1:2.

Next, the unstretched film was adjusted in thickness, stretched in the transverse direction at 80°C to a draw ratio of 5, and yielded a shrink film (a film approximately uniaxially oriented in the transverse direction). The resulting shrink film had a total thickness of 40 $\mu$m, a ratio in thickness of the layers A, B, C, B, and A (layer A:layer B:layer C:layer B:layer A) of 1:1:4:1:1, and a density (specific gravity) of 0.95 g/cm$^3$.

Examples 2 and 4 and Comparative Examples 1, 3, 4, and 6

Shrink films were prepared by the procedure of Example 1, except for using layer B materials as indicated in Table 1.

Example 3

A shrink film was prepared by the procedure of Example 1, except for using layer B materials and layer C materials as indicated in Table 1.

Comparative Example 2

A shrink film was prepared by the procedure of Example 1, except for using a layer A material and layer B materials as indicated in Table 1.

Comparative Example 5

A shrink film was prepared by the procedure of Example 1, except for using a layer A material as indicated in Table 1.

Evaluations

The shrink films obtained in the examples and comparative examples were evaluated by methods as follows.

(1) Room-temperature Interlaminar Strength (T-Peel Test)

The shrink films (before shrink processing) prepared in the examples and comparative examples were each subjected to room-temperature interlaminar strength measurement by a method as follows.

Each shrink film was cut out to a width of 15 mm in the shrink film machine direction (film-forming direction of the shrink film) and a length of 200 mm in the shrink film transverse direction (direction perpendicular to the machine direction) and thereby yielded a rectangular sample. The sample had a length of 200 mm (in the shrink film transverse direction) and a width of 15 mm (in the shrink film machine direction). Hereinafter the terms "sample longitudinal direction" and "sample width direction" respectively refer to the transverse direction and the machine direction of the shrink film.

While defining the sample longitudinal direction (the shrink film transverse direction) as a measurement direction, the sample was subjected to a T-peel test in conformity to JIS K 6854-3 under conditions as follows to measure delamination loads.

The measured delamination loads were averaged, and this was defined as a room-temperature interlaminar strength (N/15 mm).

Measurement Conditions

Measuring apparatus: Autograph (AG-IS: load cell type 500 N) supplied by Shimadzu Corporation
Temperature and humidity: at a temperature of 23±2°C and relative humidity of 50±5%
Initial chuck-to-chuck distance: 40 mm
Sample width: 15 mm
Number of testing: 3
Tensile speed: 200 mm/min
Stroke: 150 mm (when the sample ruptured, the test was discontinued, and data obtained until this time point were evaluated.)
Cut-off range in first portion: 50 mm

Sensitivity: 1

The room-temperature interlaminar strength was evaluated by peeling a pair of layers having a lowest interlaminar strength among the multilayer structure. A sample having a room-temperature interlaminar strength of 1.0 (N/15 mm) or more can be evaluated as good in room-temperature interlaminar strength, and a sample having a room-temperature interlaminar strength of 1.4 (N/15 mm) or more can be evaluated as especially good in room-temperature interlaminar strength.

(2) High-temperature Delamination Test

Each of the shrink films (before shrink processing) prepared in the examples and comparative examples was cut out in a width of 15 mm in the shrink film machine direction to give two rectangular film pieces having a length in the shrink film transverse direction. Next, an end in the film piece longitudinal direction (the shrink film transverse direction) of one of the two film pieces was bonded (sealed) with an end in the longitudinal direction of the other film piece using tetrahydrofuran (THF) and yielded one rectangular sample as illustrated in Fig. 1. The sample has a width direction and a longitudinal direction respectively corresponding to the machine direction and the transverse direction of the shrink film. The sample was adjusted so as to have a width of 15 mm, a length of 150 mm, and a seal width of 4 mm.
Fig. 1 is a schematic view (plan view) of the sample used in the test. Fig. 1 depicts a sample 11 and a sealed portion 12, in which the direction indicated by the arrow A corresponds to the sample longitudinal direction (the shrink film transverse direction).
The sample was subjected to a high-temperature delamination test.
The sample was mounted to a jig to fix both ends of the sample in the longitudinal direction without slack. Namely, the sample was fixed at the both ends in the longitudinal direction. Next, the sample mounted on the jig was immersed in hot water at 90°C for 10 seconds, retrieved from the hot water, and the sealed portion of the sample was observed immediately after retrieval.
A sample offering no delamination in the sealed portion was evaluated as good in high-temperature interlaminar strength, whereas a sample offering delamination in the sealed portion was evaluated as poor in high-temperature interlaminar strength. The results are indicated in Table 1.

(3) Thermal Shrinkage Percentage (90°C, 10 sec) in Main Orientation Direction

Each of the shrink films (before shrink processing) obtained in the examples and comparative examples was cut to give a rectangular sample. The sample had a length of 120 mm (gauge length of 100 mm) in a measurement direction and a width of 5 mm. The measurement direction herein corresponded to the main orientation direction, which in turn corresponded to the shrink film transverse direction in the examples and comparative examples.
The sample was subjected to a heat treatment (under no load) in hot water at 90°C for 10 seconds, the difference in gauge length between before and after the heat treatment was read out, from which a thermal shrinkage percentage (90°C, 10 sec) was calculated according to a computational expression as follows:

$$\text{Thermal shrinkage percentage } (90°C, 10 \text{ sec}) (\%) = (L_0 - L_1)/L_0 \times 100$$

where $L_0$ represents the gauge length (main orientation direction) before the heat treatment; and
$L_1$ represents the gauge length (main orientation direction) after the heat treatment.

(4) Density (Specific Gravity)

Each of the shrink films obtained in the examples and comparative examples was subjected to measurement of the density (specific gravity) in conformity to JIS K 7112.

[Table 1]

TABLE 1

| | | | | Example 1 | Example 2 | Example 3 | Example 4 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|---|---|---|
| LayerA material | Polystyrene resin | Styrolux S | weight % | 100 | 100 | 100 | 100 | 100 | 0 | 100 | 100 | 0 | 100 |
| | Polystyrene resin | Styrolux T | weight % | 0 | 0 | 0 | 0 | 0 | 100 | 0 | 0 | 100 | 0 |
| Layer B material | Polypropylene resin | WINTEC WFX6 | weight % | 49 | 42 | 42 | 49 | 0 | 0 | 63 | 7 | 49 | 49 |
| | Polyethylene resin | KERNEL KF260T | weight % | 3.5 | 3 | 3 | 3.5 | 0 | 0 | 4.5 | 0.5 | 3.5 | 3.5 |
| | Petroleum resin | ARKON P125 | weight % | 17.5 | 15 | 15 | 17.5 | 0 | 0 | 22.5 | 2.5 | 17.5 | 17.5 |
| | Polystyrene resin | Styrolux S | weight % | 0 | 0 | 0 | 0 | 0 | 100 | 0 | 0 | 0 | 30 |
| | Polystyrene resin | Styrolux T | weight % | 30 | 40 | 40 | 0 | 100 | 0 | 10 | 90 | 30 | 0 |
| | Polystyrene resin | L462 | weight % | 0 | 0 | 0 | 30 | 0 | 0 | 0 | 0 | 0 | 0 |
| Layer material | Polypropylene resin | WINTEC WFX6 | weight % | 70 | 70 | 56 | 70 | 70 | 70 | 70 | 70 | 70 | 70 |
| | Polyethylene resin | KERNEL KF260T | weight % | 5 | 5 | 4 | 5 | 5 | 5 | 5 | 5 | 5 | 5 |
| | Petroleum resin | ARKON P125 | weight % | 25 | 25 | 20 | 25 | 25 | 25 | 25 | 25 | 25 | 25 |
| | Polystyrene resin | Styrolux S | weight % | 0 | 0 | 20 | 0 | 0 | 0 | 0 | 0 | 0 | 0 |
| Content of styrenic-monomer-derived constitutional unit in polystyrene resin in layer A | | | weight % | 88 | 88 | 88 | 88 | 88 | 75 | 88 | 88 | 75 | 88 |
| Content of diene-derived constitutional unit in polystyrene resin in layerA | | | weight % | 12 | 12 | 12 | 12 | 12 | 25 | 12 | 12 | 25 | 12 |

EP 2 873 524 A1

(continued)

| | | Example 1 | Example 2 | Example 3 | Example 4 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|---|
| Content of styrenic-monomer-derived constitutional unit in polystyrene resin in layer B | weight % | 75 | 75 | 75 | 65 | 75 | 88 | 75 | 75 | 75 | 88 |
| Content of diene-derived constitutional unit in polystyrene resin in layer B | weight % | 25 | 25 | 25 | 35 | 25 | 12 | 25 | 25 | 25 | 12 |
| Density (specific gravity) (g/cm$^3$) | | 0.95 | 0.96 | 0.97 | 0.95 | 0.97 | 0.97 | 0.93 | 0.97 | 0.95 | 0.95 |
| Ratio in layer thickness (LayerA:Layer B:Layer C:Layer B:LayerA) | | 1:1:4:1:1 | 1:1:4:1:1 | 1:1:4:1:1 | 1:1:4:1:1 | 1:1:4:1:1 | 1:1:4:1:1 | 1:1:4:1:1 | 1:1:4:1:1 | 1:1:4:1:1 | 1:1:4:1:1 |
| Total thickness (shrink film thickness) ($\mu$m) | | 40 | 40 | 40 | 40 | 40 | 40 | 40 | 40 | 40 | 40 |
| Stretching conditions [stretching temperature (°C)/draw ratio (time)] | | 80/5 | 80/5 | 80/5 | 80/5 | 80/5 | 80/5 | 80/5 | 80/5 | 80/5 | 80/5 |
| Room-temperature interlaminar strength (N/15 mm) | | 2.33 | 238 | 1.44 | 1.70 | 0.09 | 0.12 | 0.70 | 0.09 | 2.25 | 0.20 |
| Thermal shrinkage percentage (90°C,10 sec) (%) in main orientation direction | | 49 | 51 | 53 | 49 | 48 | 44 | 47 | 48 | 41 | 51 |
| High-temperature delamination test | | Good | Good | Good | Good | Poor | Poor | Poor | Poor | Good | Poor |

EP 2 873 524 A1

[Table 2]

TABLE 2

| | Resin name | Supplier | Resin type | Remarks |
|---|---|---|---|---|
| Polystyrene resin | Styrolux S | BASF SE | SBS | styrene content of 88% and butadiene content of 12% |
| | Styrolux T | BASF SE | SBS | styrene content of 75% and butadiene content of 25% |
| | L462 | Asahi Kasei Corporation | SBS | styrene content of 65% and butadiene content of 35% |
| Polypropylene resin | WINTEC WFX6 | Japan Polypropylene Corporation | Metallocene-catalyzed propylene-ethylene random copolymer | |
| Polyethylene resin | KERNEL KF260T | Japan Polyethylene Corporation | LLDPE | |
| Petroleum resin | ARKON P125 | Arakawa Chemical Industries, Ltd. | Petroleum resin | |

As is understood from Table 1, the shrink films according to the present invention (examples) had excellent properties. Specifically they each had a low specific gravity and high shrinkability, still offered a high interlaminar strength at room temperature, and resisted delamination even upon heating. In contrast, the shrink films of Comparative Examples 1, 2, 3, 4, and 6 each had an insufficient interlaminar strength at room temperature and were susceptible to delamination also upon heating. Specifically, the shrink films of Comparative Examples 1 and 2 included no polypropylene resin in the layer B. The shrink film of Comparative Example 3 had an excessively low polystyrene resin content in the layers B. The shrink film of Comparative Example 4 had an excessively low polypropylene resin content in the layer B. The shrink film of Comparative Example 6 had an excessively high content of a styrenic-monomer-derived constitutional unit (had an excessively low content of a diene-derived constitutional unit) in the polystyrene resin in the layer B. Further in contrast, the shrink films of Comparative Examples 2 and 5 each had a low thermal shrinkage percentage and exhibited insufficient shrinkability. Specifically, they each had an excessively low content of a styrenic-monomer-derived constitutional unit (had an excessively high content of a diene-derived constitutional unit) in the polystyrene resin in the layers A.

Reference Signs List

11    sample
12    sealed portion
A    sample longitudinal direction (shrink film transverse direction)

**Claims**

**1.**   A shrink film comprising a multilayer structure comprising:

layers A, B, C, B, and A disposed in the sequence set forth without the mediation of another layer,
the layers A each independently being a resin layer comprising

50 percent by weight or more of a polystyrene resin,

the layers B each independently being a resin layer comprising:

20 to 80 percent by weight of a polystyrene resin; and
20 to 80 percent by weight of a polypropylene resin, the layer C being a resin layer comprising
50 percent by weight or more of a polypropylene resin,

the polystyrene resins in the layers A each independently comprising:

a styrenic-monomer-derived constitutional unit in a content of from 85 to 95 percent by weight; and
a diene-derived constitutional unit in a content of from 5 to 15 percent by weight,

the polystyrene resins in the layers B each independently comprising
a styrenic-monomer-derived constitutional unit in a content of from 50 to 80 percent by weight; and
a diene-derived constitutional unit in a content of from 20 percent by weight to less than 50 percent by weight.

2. A shrink label comprising
the shrink film according to claim 1.

[Fig. 1]

**INTERNATIONAL SEARCH REPORT**

| International application No. |
| --- |
| PCT/JP2013/067326 |

A. CLASSIFICATION OF SUBJECT MATTER
*B32B27/30*(2006.01)i, *B32B27/32*(2006.01)i, *B65D23/08*(2006.01)i, *B65D25/36* (2006.01)i, *B65D65/40*(2006.01)i, *G09F3/04*(2006.01)i

According to International Patent Classification (IPC) or to both national classification and IPC

B. FIELDS SEARCHED

Minimum documentation searched (classification system followed by classification symbols)
B32B27/30, B32B27/32, B65D23/08, B65D25/36, B65D65/40, G09F3/04

Documentation searched other than minimum documentation to the extent that such documents are included in the fields searched
Jitsuyo Shinan Koho          1922–1996     Jitsuyo Shinan Toroku Koho    1996–2013
Kokai Jitsuyo Shinan Koho    1971–2013     Toroku Jitsuyo Shinan Koho    1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2002-86637 A (Mitsubishi Plastics, Inc.), 26 March 2002 (26.03.2002), claims (Family: none) | 1,2 |
| A | JP 2008-132621 A (CI Kasei Co., Ltd.), 12 June 2008 (12.06.2008), claims & US 2008/0124563 A1 claims & EP 1925446 A1 | 1,2 |
| A | JP 2009-62052 A (CI Kasei Co., Ltd.), 26 March 2009 (26.03.2009), claims (Family: none) | 1,2 |

| ☒ Further documents are listed in the continuation of Box C. | ☐ See patent family annex. |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 09 September, 2013 (09.09.13) | Date of mailing of the international search report 17 September, 2013 (17.09.13) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/067326

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-6530 A  (Fuji Seal International, Inc.), 15 January 2009 (15.01.2009), claims (Family: none) | 1,2 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3286594 B

- JP 2002086637 A